# EUROPÄISCHE PATENTSCHRIFT

(11) **EP 1 212 741 B1**
(45) Veröffentlichungstag und Bekanntmachung des Hinweises auf die Patenterteilung: **04.05.2005**
(21) Anmeldenummer: 00960609.6
(22) Anmeldetag: 06.09.2000
(51) Int. Cl.: G08G 1/0969, G01C 21/36, G06F 3/033

(54) **NAVIGATIONSVORRICHTUNG**
NAVIGATION DEVICE
DISPOSITIF DE NAVIGATION

(30) Priorität: 15.09.1999 DE 19944081; 15.09.1999 DE 19944080; 08.10.1999 DE 19948561; 08.10.1999 DE 19948562
(43) Veröffentlichungstag der Anmeldung: 12.06.2002
(60) Teilanmeldung: 03021591.7
(73) Patentinhaber: AUDI AG, 85045 Ingolstadt (DE)
(72) Erfinder: HAMBERGER, Werner, 85101 Lenting (DE); REMLINGER, Wolfram, 85049 Ingolstadt (DE); SCHRÖDER, Jürgen, 85139 Wettstetten (DE)
(74) Vertreter: Thielmann, Frank
(86) Internationale Anmeldenummer: PCT/EP2000/008675
(87) Internationale Veröffentlichungsnummer: WO 2001/020579

(56) Entgegenhaltungen:
- EP-A- 0 883 054
- US-A- 4 504 913
- US-A- 4 608 656
- US-A- 4 935 728

## Beschreibung

Die Erfindung betrifft eine Navigationsvorrichtung, insbesondere zum Einbau in ein Kraftfahrzeug, gemäß dem Oberbegriff des Patentanspruchs 1.

Gattungsgemäße Navigationsvorrichtungen mit einem Monitor, auf dem eine Landkarte angezeigt werden kann, sind insbesondere für den Gebrauch in Kraftfahrzeugen allgemein bekannt. Aus dem Stand der Technik sind Navigationsvorrichtungen bekannt, bei denen der Maßstab einer auf dem Monitor dargestellten Landkarte durch die Betätigung von Druckschaftern verändert werden kann. Bei einer dieser Navigationsvorrichtungen, die beispielsweise von der Firma Audi verwendet wurde, sind die Druckschalter als Plus- und als Minustaste ausgebildet, so dass der Abbildungsmaßstab durch das Drücken der jeweiligen Taste vergrößert oder verkleinert werden kann. Damit dem Benutzer der nötige Überblick nicht verloren geht, wird die pro Tastendruck vorgenommene Maßstabsänderung klein gewählt. Dies resultiert jedoch in einer umständlichen und bisweilen zeitaufwendigen Bedienung, da die Geschwindigkeit mit der der Maßstab geändert werden kann durch das mehrfache Drücken einer der Tasten limitiert ist. Dies ist unerwünscht, da die Zeitdauer, während der der Fahrer eine Hand vom Steuer nehmen muss, minimal sein soll.

Bei einer anderen aus dem Stand der Technik bekannten Navigationsvorrichtung ist durch ein Untermenü eine Maßstabsskala auf dem Monitor abbildbar, auf der ein Balken bewegt und so ein bestimmter Maßstab ausgewählt werden kann. Eine derartige Navigationsvorrichtung wird beispielsweise bei bestimmten Fahrzeugen der Marke Toyota verwendet. Nach Bestätigung durch den Benutzer wird die Landkarte entsprechend dem gewählten Maßstab auf dem Monitor dargestellt. Eine solche Navigationsvorrichtung setzt jedoch voraus, dass der Benutzer vor der Wahl Überlegungen darüber anstellt, welcher Maßstab einer für ihn optimalen Darstellung der Landkarte entspricht. Ein Benutzer, der bisher wenig Erfahrung mit dieser Vorrichtung gesammelt hat, wird daher nicht in der Lage sein, den Maßstab entsprechend der gewünschten Darstellung auszuwählen. Möchte der Benutzer häufig Maßstabsänderungen vornehmen, erscheint diese Vorrichtung außerdem sehr umständlich und wenig bedienfreundlich.

Aus der US 4 608 656 ist eine Straßenkartenanzeige für ein Auto bekannt, wobei im Zentrum der Anzeige eine Art Cursor dargestellt ist, der die Position des Autos auf der Straßenkarte wiederspiegelt und die Fahrtrichtung anzeigt. Während der Fahrt mit dem Auto wird die Karte automatisch so bewegt, dass sich der Cursor immer im Zentrum der Karte befindet. Außerdem wird die Karte entsprechend der Fahrtrichtung gedreht. Für die Eingabe der Anfangsposition des Fahrzeugs ist ein Joystickpaar vorgesehen. Außerdem ist eine sogenannte Maßstabsauswahleinheit vorgesehen, mit der der Maßstab der Straßenkarte ausgewählt werden kann. Der Mittelpunkt bleibt vorzugsweise bei dieser Maßstabswahl erhalten. Als Bedienelemente werden eine Tastatur und das erwähnte Joystickpaar verwendet.

Aus der US 4 935 728 ist eine Vorrichtung bekannt, mit der ein Cursor auf einem Bildschirm bewegt werden kann. Zu diesem Zweck wird ein mit zwei Fingern greifbares Bedienelement eingesetzt, das ähnlich einem Joystick in X-und Y-Richtung bewegt werden kann und zusätzlich ein oder zwei Druckeinheiten aufweist. Die Bewegung des Bedienelements in X- und Y-Richtung wird auf den Cursor übertragen, der daraufhin in einem Feinpositionierungsmodus oder in einem Grobpositionierungsmodus bewegt wird. Um das greifbare Bedienelement können weitere Schalter angeordnet sein. Die Bewegung des Bedienelements kann insbesondere dazu verwendet werden, Felder auf dem Bildschirm auszuwählen. Der Darstellungsmaßstab kann ebenfalls geändert werden.

In der US 4 504 913 wird ein elektronisches Navigationssystem für Kraftfahrzeuge beschrieben. Es weist ein Display auf, auf dem Landkarten angezeigt werden und in den verschiedenen Abbildungsmaßstäben aufgerufen werden können. Außerdem ist auf dem Display ein Cursor anzeigbar, der durch den Bediener bewegt werden kann.

Schließlich ist aus der EP 0 883 054 A2 ein Anzeigegerät für eine digitale Karte offenbart, das auch in Navigationssystemen in Fahrzeugen verwendet werden kann. Zum Verändern des Maßstabs der auf dem Anzeigegerät angezeigten Landkarte wird das Scrollrad einer Maus bei gleichzeitigem Drücken einer bestimmten Maustaste vorgeschlagen. Derartige Mäuse sind unter dem Handelsnamen "Intellimouse" der Firma Microsoft Co., Ltd. bekannt.

Vor diesem Hintergrund liegt der Erfindung die Aufgabe zugrunde, eine gattungsgemäße Navigationsvorrichtung derart weiterzubilden, dass der Maßstab einer Abbildung, insbesondere einer Landkarte, einfach und in möglichst kurzer Zeit auch von einem ungeübten Benutzer in gewünschter Weise bei hoher Bedienungsfreundlichkeit verändert werden kann.

Diese Aufgabe wird gelöst durch eine Navigationsvorrichtung gemäß den Merkmalen des Patentanspruchs 1. Die Unteransprüche betreffen besonders zweckmäßige Weiterbildungen der Erfindung.

Erfindungsgemäß wird eine Navigationsvorrichtung bereitgestellt, bei der die Mäßstabsänderung durch das Drehen eines Drehschalters erfolgt, der mit einer Geschwindigkeit gedreht werden kann, die der Benutzer selbst bestimmt. Die Zeit, die für die Maßstabsänderung erforderlich ist, hängt also lediglich davon ab, wie schnell die Abbildung mit dem neuen Maßstab auf dem Monitor darstellbar ist. Außerdem kann auch ein ungeübter Benutzer durch direkte Beobachtung der Abbildungsveränderung beim Drehen des Drehschalters leicht den von ihm gewünschten Darstellungsmaßstab finden. Die erfindungsgemäße Navigationsvorrichtung kann daher als äußerst komfortabel und überaus einfach zu bedienen bezeichnet werden. Sie bietet weiterhin den Vorteil, dass lediglich ein Bedienelement vorgesehen und vom Bediener gefunden und angefasst werden muss, um eine Maßstabsänderung vorzunehmen.

Bei der Erfindung kann durch Betätigung des Drehschalters, beispielsweise durch Drehung des Drehschalters oder axiale Krafteinwirkung auf den Drehschalter, in einem weiteren Bedienmodus die Bewegung eines Cursors entlang oder entgegen einer ausgewählten Richtung ausführbar oder auslösbar sein, wodurch die Bedienung der Navigationsvorrichtung weiter vereinfacht wird, da der Benutzer seine Hand oder seine Finger auch für die Bewegung des Cursors nicht neu positionieren muss. Weist der Drehschalter mehrere Bedienmodi auf ist diese Funktion vorzugsweise mit den Extremstellungen des Drehschalters, d.h. ganz eingedrückt oder ganz herausgezogen, verknüpft. Die Auslösung oder Ausführung einer Bewegung des Cursors kann hierbei vor oder nach dem Einstellen einer Bewegungsrichtung des Cursors erfolgen. Bei Auslösung einer Bewegung vor dem Einstellen einer Bewegungsrichtung kommen als Defaultrichtung vorzugsweise in Frage die zuletzt eingestellte Bewegungsrichtung, die Bewegung entlang einer zuvor eingestellten Route oder in Richtung eines zuvor eingegebenen Ziels. Die Anfangsrichtung des Cursors kann dann während der Bewegung des Cursors durch Drehung des Drehschalters in die gewünschte Richtung geändert werden.

Wird die Bewegung des Cursors durch axiale Krafteinwirkung auf den Drehschalter, zum Beispiel über eine vorbestimmte Zeit, ausgelöst, ergibt sich der Vorteil, dass besonders bei einer längeren Bewegung des Cursors in eine Richtung nicht wie bei längerem Drehen des Drehschalters in eine Richtung immer wieder nachgegriffen werden muss, sondern, dass die Hand oder die Finger während der Cursorbewegung in gleicher Weise an dem Drehschalter positioniert bleiben können.

Eine vorteilhafte Weiterbildung der Erfindung sieht vor, dass der Mittelpunkt der Abbildung bei der Maßstabswahl erhalten bleibt, da der Benutzer den auf dem Monitor sichtbaren Abbildungsausschnitt instinktiv so wählen wird, dass der ihn interessierende Bereich der Abbildung nahezu in der Mitte liegt.

Durch Drehung des Drehschalters kann in einem weiteren Bedienmodus die Bewegungsrichtung eines Cursors auf der Abbildung wählbar sein. Indem der Drehschalter, beispielsweise in anderen axialen Stellungen, noch für andere Bedienfunktionen der Navigationsvorrichtung verwendbar ist, wird der Bedienkomfort der Navigationsvorrichtung weiter gesteigert. Die Änderung der möglichen Bewegungsrichtung des Cursors durch Drehen des Drehschalters ist besonders bedienfreundlich, da die vom Benutzer auszuführende Bewegung ähnlich der auf dem Monitor zu beobachtenden Drehung des zum Beispiel als Pfeil dargestellten Cursors ist. Auf diese Art und Weise kann die Bewegungsrichtung des Cursors außerdem überaus flexibel eingestellt werden, und der Benutzer ist nicht wie in anderen Vorrichtungen an eine Bewegung in nur vier oder acht verschiedenen Richtungen, wie z. B. rechts, links, oben und unten gebunden.

Es kann weiterhin vorgesehen werden, dass durch Drehung des Drehschalters in einem weiteren Bedienmodus eine Funktion wählbar ist. Durch eine solche Ausführungsform wird die Anbringung zahlreicher Funktionstasten überflüssig und die Bedieneinheit der erfindungsgemäßen Navigationsvorrichtung bleibt übersichtlich. Durch die Funktion kann der Bedienmodus und/oder mindestens einer der weiteren Bedienmodi einstellbar sein. Der Bedienmodus könnte folglich auch durch Drehung des Drehschalters gewählt werden, wodurch eine sehr große Anzahl von verschiedenen Bedienmodi wählbar ist, so dass mit dem Drehschalter alle für die Benutzung der Navigationsvorrichtung notwendigen Bedienschritte durchgeführt werden können.

Einer weiteren Ausführungsform der Erfindung sieht vor, dass der Bedienmodus und/oder mindestens einer der weiteren Bedienmodi durch die Betätigung mindestens eines weiteren Dreh-, Druck- und/oder Schiebeschalters einstellbar ist. Diese Ausführung ist insbesondere dann von großem Vorteil, wenn der Bedienmodus sehr häufig gewechselt werden muss.

Bei einer vorteilhaften Weiterbildung der Erfindung ist der Bedienmodus und/oder mindestens einer der weiteren Bedienmodi durch mindestens eine axiale Krafteinwirkung über eine vorbestimmte Zeit auf den Drehschalter, vorzugsweise gegen eine Federkraft, einstellbar. Diese Weiterbildung ist besonders leicht zu bedienen, wenn nur wenige Bedienmodi genutzt werden.

Im folgenden wird eine Ausführungsform der Erfindung anhand von Zeichnungen beschrieben.

Es zeigt
- Figur 1:: eine schematische Darstellung eines Drehschalters der erfindungsgemäßen Navigationsvorrichtung in einer Aufsicht;
- Figur 2:: eine schematische Darstellung des Drehschalters gemäß Figur 1 in einer Seitenansicht; und
- Figur 3:: eine schematische Darstellung eines Monitors der erfindungsgemäßen Navigationsvorrichtung.

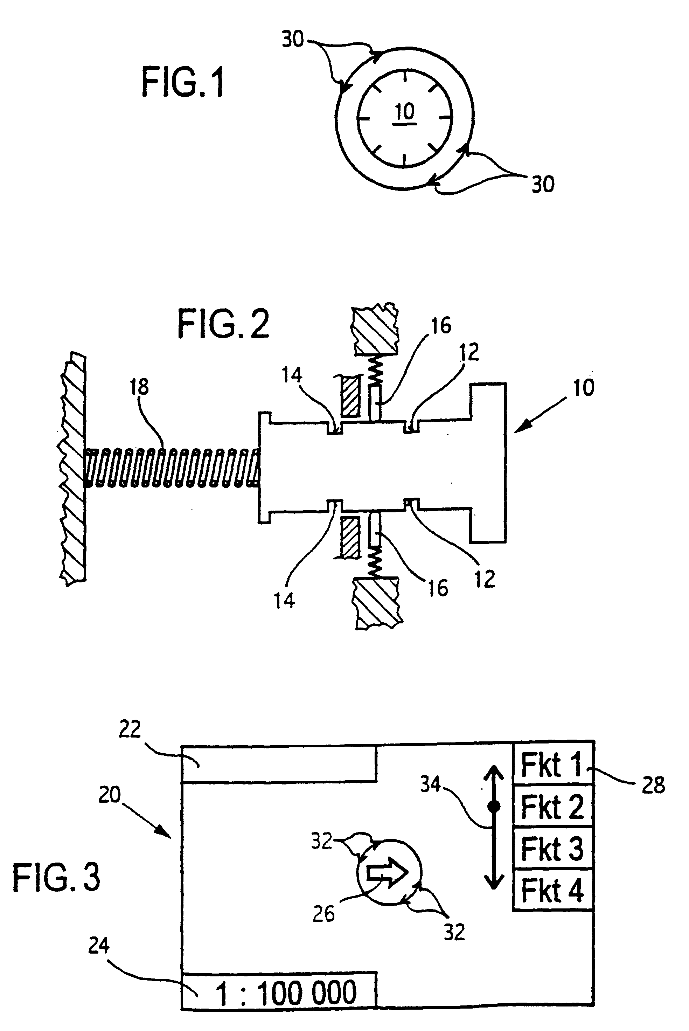

In einer für den Benutzer ergonomisch günstigen Lage ist in einem Kraftfahrzeug ein Drehschalter 10 angebracht, der in den Figuren 1 und 2 dargestellt ist. Dieser Drehschalter 10 wird neben der Bedienung der Navigationsvorrichtung auch für andere Zwecke, d.h. für die Bedienung anderer Vorrichtungen im Kraftfahrzeug verwendet, beispielsweise zum Bedienen eines Autotelefons, eines CD-Spielers und dergleichen. Dieser Drehschalter 10 ist, wie durch die Pfeile 30 angedeutet, mit und entgegen dem Uhrzeigersinn drehbar und außerdem durch eine axiale Bewegung in verschiedene Stellungen überführbar, wobei der Benutzer bei dem Übergang zwischen den einzelnen Axialstellungen eine haptische Rückmeldung erfährt. Der Drehschalter 10 weist eine erste Vertiefung 12 und eine zweite Vertiefung 14 auf, in die Rastelemente 16 einrasten können, so dass der Drehschalter 10 in zwei verschiedenen Axialstellungen fixiert werden kann. Eine Bewegung aus der in Figur 2 gezeigten Gleichgewichtsposition heraus erfolgt gegen die Kraft einer Feder 18.

Die Navigationsvorrichtung weist außerdem einen Monitor 20 auf, der in Figur 3 schematisch abgebildet ist und in einem Kraftfahrzeug so angebracht wird, dass er für den Benutzer gut sichtbar ist.

Die einzelnen Axialstellungen sind mit verschiedenen Bedienmodi korreliert, wobei die Bedienmodi und ihre Einstellung nachfolgend anhand der Figuren 2 und 3 beschrieben werden.

Eine erste Axialstellung ist durch Drücken des Drehschalters 10 bis zu einem merklichen Anschlag einzustellen, wobei die Rastelemente 16 in die erste Vertiefung 12 einrasten. Auf dem Monitor 20 wird in einem ersten Anzeigefeld 22 der Bedienmodus "Maßstabsänderung" angezeigt. Außerdem wird auf dem Monitor 20 in einem zweiten Anzeigefeld 24 ein Anzeigezeichen dargestellt, das einen aktuellen Maßstab einer abgebildeten Landkarte wiedergibt. Durch die Drehung des Drehschalters 10 kann nun der Maßstab der Landkarte verändert werden, wobei die Landkarte im jeweils aktuellen Maßstab gleichzeitig auf dem Monitor 20 angezeigt wird. Wird die Drehbewegung des Drehschalters 10 eingestellt, wird der aktuelle Abbildungsmaßstab gespeichert und bleibt bis zu einer nachfolgenden Maßstabsänderung erhalten.

Eine zweite Axialstellung ist ausgehend von der ersten Axialstellung durch leichten Druck auf den Drehschalter 10 gegen die Federkraft 18 zu erreichen. In dieser Stellung rastet der Drehschalter 10 nicht ein, wird jedoch diese Stellung über eine vorbestimmte Zeit eingenommen, lässt sich dadurch ein weiterer Bedienmodus wählen. Der dadurch gewählte Bedienmodus "Cursorbewegung-Pfeilrichtung" wird wiederum auf dem Monitor 20 in dem ersten Anzeigefeld 22 angezeigt. Auf dem Monitor 20 ist nun ebenfalls ein Cursor 26 zu erkennen, der beginnt, sich in einer Defaultrichtung zu bewegen. Die Geschwindigkeit der Cursorbewegung kann mit dem Abbildungsmaßstab der Landkarte in geeigneter Weise korreliert sein. Durch Drehung des Drehschalters 10 kann eine Änderung der Bewegungsrichtung des Cursors 26 herbeigeführt werden, wie durch die Pfeile 32 angedeutet wird. Hierbei kann der Cursor 26 als Pfeil auf dem Monitor 20 dargestellt sein, um seine Bewegungsrichtung zu verdeutlichen. Durch ein nochmaliges Drücken des Drehschalters 10 in die zweite axiale Stellung über eine vorbestimmte Zeit kann der Bedienmodus "Cursorbewegung-Pfeilrichtung" wieder verlassen werden.

Eine dritte Axialstellung ist ausgehend von der ersten Axialsteliung durch leichtes Anziehen des Drehschalters 10 zu erreichen. Dabei rasten die Rastelemente 16 für den Benutzer spürbar in die zweite Vertiefung 14 des Drehschalters 10 ein. Eine vorher ausgewählte Route wird auf der Landkarte optisch hervorgehoben und außerdem wird der aktuelle Bedienmodus "Cursorbewegung-Route" in dem ersten Anzeigefeld 22 auf dem Monitor 20 angezeigt. Durch die Drehung des Drehschalters 10 lässt sich der Cursor 26 entlang der zuvor ausgewählten Route bewegen.

Ausgehend von der dritten Axialstellung gelangt man in die vierte Axialstellung durch Ziehen am Drehschalter 10. Wird diese Stellung, in der der Drehschalter 10 nicht einrastet, über eine vorbestimmte Zeit eingenommen, so lässt sich damit ein weiterer Bedienmodus wählen. In diesem Bedienmodus können Funktionen, die nun innerhalb eines dritten Anzeigefeldes 28 auf dem Monitor 20 dargestellt sind, durch Drehen des Drehschalters 10 ausgewählt werden. Dies wird durch den Pfeil 34 veranschaulicht. Die jeweils angewählte Funktion wird auf dem Monitor 20 optisch hervorgehoben und durch kurzes Drücken oder Ziehen des Drehschalters 10 wird die angewähtte Funktion aufgerufen. Die Funktionen werden so auf dem Monitor 20 dargestellt, dass die Sicht auf die Landkarte nicht unnötig behindert wird. In einer Ausführungsform der Erfindung sind die dargestellten Funktionen kreisförmig auf dem Monitor 20 angeordnet.

Eine der wählbaren Funktionen ist die sogenannte "Ortsinformation", durch die Informationen zu einem Ort oder dessen näherer Umgebung abrufbar sind. Eine weitere Funktion ist die Festlegung des in einem der Bedienmodi mit dem Cursor 26 ausgewählten Punktes auf der Landkarte als "Zwischenziel" oder als "Ziel". Durch eine Funktion "Entfemungsanzeige" wird die Entfernung der aktuellen Position des Fahrzeugs zu einem mit dem Cursor 26 ausgewählten Punkt auf der Landkarte angezeigt.

In einer alternativen Ausführung der Erfindung ist der Cursor 26 auf den Mittelpunkt der auf dem Monitor 20 dargestellten Abbildung fixiert, und im Bedienmodus "Cursorbewegung-Pfeilrichtung" sowie "Cursorbewegung-Route" wird die Landkarte entweder entsprechend der Pfeilrichtung des Cursors 26 bewegt oder derartig verschoben, dass der Abbildungsmittelpunkt auf der vorbestimmten Route entlang geführt wird.

Bei einer weiteren alternativen Ausführungsform kann die Cursorbewegungsrichtung bei Stillstand des Cursors 26 eingestellt werden. Nach erfolgter Einstellung kann dann durch Betätigung des Drehschalters 10 eine Bewegung des Cursors 26 in dieser Richtung ausgelöst werden, wobei diese Richtung durch Drehen des Drehschalters 10 modifiziert werden kann.

In einer weiteren alternativen Ausführungsform kann ein Umschalten der Betriebsmodi zum Beispiel durch einen gegen eine Federkraft 18 gelagerten Drehschalter 10 erfolgen, wobei die verschiedenen Betriebsmodi zyklisch durchlaufen werden und ein einmaliges kurzes Drücken des Drehschalters 10 mit einem ersten Betriebsmodus, ein zweimaliges kurz hintereinander erfolgtes Drücken mit einem zweiten Betriebsmodus usw. korreliert ist.

## Patentansprüche

1. Navigationsvorrichtung, insbesondere zum Einbau in ein Kraftfahrzeug, die einen Monitor (20) aufweist, auf dem eine Abbildung, insbesondere eine Landkarte, und ein Cursor darstellbar ist,
**dadurch gekennzeichnet,**
**dass** durch Drehung eines Drehschalters (10) in einem Bedienmodus der Maßstab der Abbildung wählbar ist, wobei in einem weiteren Bedienmodus mittels des Drehschalters die Bewegung des Cursors (26) entlang einer vorbestimmten Route auf der Abbildung ausführbar ist.

2. Navigationsvorrichtung nach Anspruch 1,
**dadurch gekennzeichnet,**
**dass** die Bewegung des Cursors (26) durch axiale Krafteinwirkung auf den Drehschalter (10) oder durch Drehung des Drehschalters (10) ausführbar ist.

3. Navigationsvorrichtung nach Anspruch 1 oder 2,
**dadurch gekennzeichnet,**
**dass** der Mittelpunkt der Abbildung bei der Maßstabswahl erhalten bleibt.

4. Navigationsvorrichtung nach einem der vorhergehenden Ansprüche,
**dadurch gekennzeichnet,**
**dass** durch Drehung des Drehschalters (10) in einem weiteren Bedienmodus die Bewegungsrichtung eines Cursors (26) auf der Abbildung wählbar ist.

5. Navigationsvorrichtung nach einem der vorhergehenden Ansprüche,
**dadurch gekennzeichnet,**
**dass** durch Drehung des Drehschalters (10) in einem weiteren Bedienmodus die Bewegung des oder eines Cursors (26) entlang oder entgegen einer ausgewählten Bewegungsrichtung ausführbar ist.

6. Navigationsvorrichtung nach einem der vorhergehenden Ansprüche,
**dadurch gekennzeichnet,**
**dass** durch eine axiale Krafteinwirkung auf den Drehschalter (10) die Bewegung des oder eines Cursors (26) entlang oder entgegen einer oder der ausgewählten Bewegungsrichtung ausführbar oder auslösbar ist.

7. Navigationsvorrichtung nach Anspruch 5 oder 6,
**dadurch gekennzeichnet,**
**dass** die Bewegungsrichtung des Cursors (26) während der Bewegung des Cursors (26) oder bei Stillstand des Cursors (26) durch Drehung des Drehschalters (10) änderbar ist.

8. Navigationsvorrichtung nach einem der vorhergehenden Ansprüche,
**dadurch gekennzeichnet,**
**dass** eine Abbildung aufrufbar ist, die ein Menü (28) mit mindestens einer Funktion aufweist.

9. Navigationsvorrichtung nach einem der vorhergehenden Ansprüche,
**dadurch gekennzeichnet,**
**dass** durch Drehung des Drehschalters (10) in einem weiteren Bedienmodus eine Funktion wählbar ist.

10. Navigationsvorrichtung nach einem der Ansprüche 8 oder 9,
**dadurch gekennzeichnet,**
**dass** durch die Funktion Information zu einem der oder einer aktuellen Cursorposition entsprechenden Punkt oder zu einem Umkreis des entsprechenden Punktes auf der Landkarte abrufbar sind.

11. Navigationsvorrichtung nach einem der Ansprüche 8 bis 10,
**dadurch gekennzeichnet,**
**dass** durch die Funktion der der aktuellen Cursorposition entsprechende Punkt auf der Landkarte als Ziel oder Zwischenziel setzbar ist.

12. Navigationsvorrichtung nach Anspruch 8,
**dadurch gekennzeichnet,**
**dass** durch die Funktion der Bedienmodus und/oder mindestens einer der weiteren Bedienmodi einstellbar ist.

13. Navigationsvorrichtung nach einem der vorhergehenden Ansprüche,
**dadurch gekennzeichnet,**
**dass** der Bedienmodus und/oder mindestens einer der weiteren Bedienmodi durch eine axiale Bewegung des Drehschalters (10) einstellbar ist.

14. Navigationsvorrichtung nach einem der vorhergehenden Ansprüche,
**dadurch gekennzeichnet,**
**dass** der Bedienmodus und/oder mindestens einer der weiteren Bedienmodi durch die Betätigung mindestens eines weiteren Dreh-, Druck- und/oder Schiebeschalters einstellbar ist.

15. Navigationsvorrichtung nach einem der vorhergehenden Ansprüche,
**dadurch gekennzeichnet,**
**dass** der Bedienmodus und/oder mindestens einer der weiteren Bedienmodi durch mindestens eine kurze axiale Krafteinwirkung auf den Drehschalter (10) einstellbar ist.

## Claims

1. Navigation device, in particular for installation in a motor vehicle, comprising a monitor (20) which illustrates an image, in particular a map, and a cursor,
**characterised in that** the scale of the image is selected in an operating mode by turning a rotary switch (10), and the movement of the cursor (26) along a predetermined route is performed in a further operating mode by means of the rotary switch.

2. Navigation device according to Claim 1,
**characterised in that** the movement of the cursor (26) is carried out by axial force onto rotary switch (10) or by turning the rotary switch (10).

3. Navigation device according to Claim 1 or 2,
**characterised in that** the centre point of the image is maintained when selecting the scale.

4. Navigation device according to one of the above claims,
**characterised in that** the movement direction of a cursor (26) on the image is selected in an additional operating mode.

5. Navigation device according to one of the above claims,
**characterised in that** the movement of the/a cursor (26) along or against a selected movement direction is carried out in a further operating mode by turning the rotary switch (10).

6. Navigation device according to one of the above claims,
**characterised in that** the movement of the/a cursor (26) along or against one/the selected movement direction is carried out or triggered by axial force on the rotary switch (10).

7. Navigation device according to Claim 5 or 6,
**characterised in that** the movement direction of the cursor (26) can be changed during movement of the cursor (26) or idling of the cursor (26) by turning the rotary switch (10).

8. Navigation device according to one of the above claims,
**characterised in that** an image can be called up which includes a menu (28) with at least one function.

9. Navigation device according to one of the above claims,
**characterised in that** a function is selected by turning the rotary switch (10) in an additional operating mode.

10. Navigation device according to one of Claims 8 or 9,
**characterised in that** information relative to a point corresponding with one/a current cursor position or a radius of subject point can be called up onto the map by way of the function.

11. Navigation device according to one of Claims 8 to 10,
**characterised in that** the point on the map corresponding with the current cursor position can be set as destination or intermediate destination by way of the function.

12. Navigation device according to Claim 8,
**characterised in that** the operating mode and/or at least one of the additional operating modes can be set by way of the function.

13. Navigation device according to one of the above claims,
**characterised in that** the operating mode and/or at least one of the additional operating modes are set by an axial movement of the rotary switch (10).

14. Navigation device according to one of the above claims,
**characterised in that** the operating mode and/or at least one of the additional operating modes is set by operating at least one additional rotary, pressure and/or sliding switch.

15. Navigation device according to one of the above claims,
**characterised in that** the operating mode and/or at least one of the additional operating modes is set by at least a short axial force on the rotary switch (10).

## Revendications

1. Dispositif de navigation, destiné notamment à être installé dans un véhicule automobile, comportant un moniteur (20) sur lequel peut être représenté un affichage, notamment une carte géographique, et un curseur,
**caractérisé en ce que**,
l'échelle de l'affichage peut être sélectionnée en tournant un commutateur rotatif (10) dans un mode de commande, alors que dans un autre mode de commande le déplacement du curseur (26) le long d'un itinéraire prédéterminé peut être effectué sur l'affichage au moyen du commutateur rotatif.

2. Dispositif de navigation selon la revendication 1,
**caractérisé en ce que**
le déplacement du curseur (26) peut être effectué par une force axiale exercée sur le commutateur rotatif (10) ou en tournant le commutateur rotatif (10).

3. Dispositif de navigation selon la revendication 1 ou 2,
**caractérisé en ce que**
le point central de l'affichage est conservé lors de la sélection d'échelle.

4. Dispositif de navigation selon l'une quelconque des revendications précédentes,
**caractérisé en ce que**
le sens de déplacement d'un curseur (26) peut être sélectionné sur l'affichage en tournant le commutateur rotatif (10) dans un autre mode de commande.

5. Dispositif de navigation selon l'une quelconque des revendications précédentes,
**caractérisé en ce que**,
dans un autre mode de commande, le déplacement du ou d'un curseur (26) le long ou à l'opposé d'un sens de déplacement sélectionné peut être effectué en tournant le commutateur rotatif (10).

6. Dispositif de navigation selon l'une quelconque des revendications précédentes,
**caractérisé en ce que**,
le déplacement du ou d'un curseur (26) le long ou à l'opposé d'un sens de déplacement ou du sens de déplacement sélectionné peut être effectué ou déclenché par une force axiale exercée sur le commutateur rotatif (10).

7. Dispositif de navigation selon la revendication 5 ou 6,
**caractérisé en ce que**
le sens de déplacement du curseur (26) peut être modifié pendant le déplacement du curseur (26) ou à l'état immobilisé du curseur (26), en tournant le commutateur rotatif (10).

8. Dispositif de navigation selon l'une quelconque des revendications précédentes,
**caractérisé en ce que** .
un affichage, qui comporte un menu (28) avec au moins une fonction, peut être appelé.

9. Dispositif de navigation selon l'une quelconque des revendications précédentes,
**caractérisé en ce que**,
dans un autre mode de commande, une fonction peut être sélectionnée en tournant le commutateur rotatif (10) dans un autre mode de commande.

10. Dispositif de navigation selon l'une des revendications 8 ou 9,
**caractérisé en ce que**
des informations relatives à un point correspondant à la position ou à une position actuelle du curseur, ou à l'environnement du point correspondant sur la carte géographique, peuvent être appelées par la fonction.

11. Dispositif de navigation selon l'une quelconque des revendications 8 à 10,
**caractérisé en ce que,**
par la fonction, le point sur la carte géographique correspondant à la position actuelle du curseur peut être défini en tant que destination ou destination intermédiaire.

12. Dispositif de navigation selon la revendication 8,
**caractérisé en ce que**
le mode de commande et/ou au moins l'un des autres modes de commande peuvent être réglés par la fonction.

13. Dispositif de navigation selon l'une quelconque des revendications précédentes,
**caractérisé en ce que**
le mode de commande et/ou au moins l'un des autres modes de commande peuvent être réglés par un mouvement axial du commutateur rotatif (10).

14. Dispositif de navigation selon l'une quelconque des revendications précédentes,
**caractérisé en ce que**
le mode de commande et/ou au moins l'un des autres modes de commande peuvent être réglés par l'actionnement d'au moins un autre commutateur rotatif, à pression et/ou coulissant.

15. Dispositif de navigation selon l'une quelconque des revendications précédentes,
**caractérisé en ce que**
le mode de commande et/ou au moins l'un des autres modes de commande peuvent être réglés par au moins un bref effet de force axiale exercée sur le commutateur rotatif (10).
